**Europäisches Patentamt**

**European Patent Office**

**Office européen des brevets**

(19)

(11) Veröffentlichungsnummer: **0 283 858**

**A1**

(12) # EUROPÄISCHE PATENTANMELDUNG

(21) Anmeldenummer: **88103750.1**

(22) Anmeldetag: **09.03.88**

(51) Int. Cl.⁴: **A61C 5/10**

(30) Priorität: **16.03.87 DE 3708519**

(43) Veröffentlichungstag der Anmeldung:
**28.09.88 Patentblatt 88/39**

(84) Benannte Vertragsstaaten:
**AT BE CH DE ES FR GB GR IT LI LU NL SE**

(71) Anmelder: **Frank, Michael**
**Basler Strasse 8**
**D-7889 Grenzach-Whylen(DE)**

Anmelder: **Schössow, Dieter**
**Basler Strasse 8**
**D-7889 Grenzach-Whylen(DE)**

(72) Erfinder: **Frank, Michael**
**Basler Strasse 8**
**D-7889 Grenzach-Whylen(DE)**
Erfinder: **Schössow, Dieter**
**Basler Strasse 8**
**D-7889 Grenzach-Whylen(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) **Dentalkappe zur Verwendung bei der Herstellung von Verbundkronen.**

(57) Dentalkappe für die Verblendung einer Verbundkrone, aus einer Edelmetall-Folie in im wesentlichen zylindrischer oder zylindrisch-kegelstumpfförmiger Gestalt, die ausgehend von einem kreisförmigen Folienstück (1) durch Umbiegen des äußeren Bereichs desselben in Richtung auf die Drehachse (M) desselben unter Ausbildung von gegenseitigen Überlappungen gebildet ist, die miteinander unlösbar zu verbinden sind, wobei der äußere Bereich des kreisförmigen Folienstücks in mindestens zwei etwa flügelförmige Lappen (4-7) unterteilt ist, wobei einander benachbarte Lappen in einem solchen Abstand (A) vom Zentrum (Z) des kreisförmigen Folienstücks miteinander in Verbindung stehen, der mindestens dem halben Durchmesser (D) der Kappenoberseite (O) entspricht.

Fig. 1

Fig. 3

EP 0 283 858 A1

# Dentalkappe zur Verwendung bei der Herstellung von Verbundkronen

Die Erfindung betrifft eine Dentalkappe zur Verwendung als Träger für die Verblendung einer Verbundkrone gemäß Oberbegriff des Anspruchs 1.

Eine solche Kappe ist beispielsweise bereits aus der EP-A1 01 04 320 bekannt. Mit Ausnahme des Zentralbereichs des kreisförmigen Folienstücks ist diese Kappe zieharmonikaförmig vorgefaltet und dabei zugleich in Richtung auf die Drehachse des Folienstücks umgebogen, so daß der äußere Bereich der Kappe in seinem Aussehen etwa einem halbaufgespannten Regenschirm entspricht. Die so vorgeformte Kappe wird später vom Zahntechniker auf ein Zahnstumpfmodell, das den Gegebenheiten eines Patienten entspricht, aufgesetzt, im Zentralbereich radial gegen das Zahnstumpfmodell gedrückt und so festgehalten unter gleichzeitigem Anrollen der zieharmonikaförmigen Faltung des äußeren Bereichs gegen die Außenfläche des Zahnstumpfmodells, was etwa dem weiteren Schließen eines Regenschirms und Herumwickeln um den Stock des Regenschirms entspricht. In Hinblick auf die genaue Anpassung der Dentalkappe an das Zahnstumpfmodell muß beim Zusammenfalten der zieharmonikaförmigen Faltung und dem Anrollen gegen die Außenfläche des Zahnstumpfmodells sehr genau gearbeitet werden. Diese Arbeit ist im übrigen nur manuell vom Zahntechniker ausführbar, somit verhältnismäßig zeit- und damit kostenaufwendig. Darüber hinaus erfordert das Anrollen der Folie gegen das Zahnstumpfmodell eine große Geschicklichkeit vom Zahntechniker, damit nicht durch an sich unbeabsichtigte Querfalten oder dergleichen lokale Unregelmäßigkeiten in der Wandstärke der Kappe auftreten, die sich selbst bei anschließendem Einsatz der angerollten Kappe in einen sogenannten Swager nicht egalisieren lassen. Solche unbeabsichtigten Querfaltungen können Lufteinschlüsse enthalten, die sich bei der Nachbehandlung in einer Flamme zur Erreichung einer unlösbaren gegenseitigen Fixierung einander überlappender Bereiche der Folie nicht mit Flüssiggold füllen lassen.

Der Erfindung liegt daher die Aufgabe zugrunde, die Dentalkappe der eingangs bezeichneten Art so auszubilden, daß sie einfacher und - schneller und somit preiswerter herstellbar ist und dabei insbesondere keine überhohen Anforderungen an die Geschicklichkeit des verarbeitenden Zahntechnikers stellt, sondern stattdessen auch von einem in dieser Arbeit ungeübten Zahntechniker unter Verwendung einfachster Geräte jederzeit zufriedenstellend verarbeitbar ist.

Diese Aufgabe wird erfindungsgemäß durch die im kennzeichnenden Teil des Patentanspruchs 1 angegebenen Maßnahmen gelöst.

Vorteilhafte Weiterbildungen sind aus den Unteransprüchen zu ersehen.

Durch die erfindungsgemäße Ausbildung läßt sich bereits das den Ausgang für die Herstellung der Dentalkappe bildende Folienstück einfacher herstellen. Dieses ursprünglich kreisförmige Folienstück muß nämlich in der erfindungsgemäßen Grundform nur mit Einschnitten im äußeren Bereich versehen werden bzw. in Weiterbildungsform mit im Bereich der vorzusehenden Einschnitte liegenden Ausschnitten. Es müssen also keine Vorprägungen für Faltlinien irgendwelcher Art und - schon gar nicht für solche wechselseitig von der einen und von der anderen Seite des Folienstücks aus vorgesehen werden. Diese Ausbildung des Folienstücks wirkt sich dann auf die Herstellung der Dentalkappe weiter vereinfachend aus, da es ohne weiteres möglich ist, die beispielsweise vordere Radialkante eines durch die Einschnitte in dem Folienstück gebildeten Lappens an der hinteren Radialkante des benachbarten Lappens vorbeizuführen oder aber zunächst jeweils jeden zweiten Lappen in Richtung auf die Drehachse umzubiegen und danach die übrigen Lappen in gleicher Richtung umzubiegen, wonach letztere dann mit ihren vorderen und hinteren Radialkanten außenseitig der erstgenannten Lappen liegen. Die solchermaßen gestaltete Dentalkappe muß nur auf ein Zahnstumpfmodell aufgesetzt werden und kann dann ohne weitere manuelle Zwischenarbeit zusammen mit dem Zahnstumpfmodell in einen Swager eingebracht werden, wo mit einem einzigen kräftigen Schlag in Axialrichtung des Zahnstumpfmodells die Dentalkappe zu der Gestalt verformbar ist, mit der sie zur gegenseitigen unlösbaren Fixierung der Lappen des Folienstücks einer Flamme ausgesetzt wird, um im Wege einer Goldverschmelzung eine in ihrem Umfangsmantel in sich geschlossene, äußerst stabile Dentalkappe zu erreichen, die dann für die anschließende Verblendung mit Porzellan oder Kuunststoff zur Verfügung steht.

Es entfällt also praktisch jede besondere manuelle Arbeit des Zahntechnikers, und sind darüber hinaus keine besonderen Fähigkeiten des Zahntechnikers erforderlich, wodurch insgesamt die Arbeitszeit für die Herstellung der fertigen Dentalkappe erheblich reduziert wird, so daß die Herstellung einer fertigen Verbundkrone bei mindestens gleicher Qualität wie bisher erheblich preiswerter ist.

Im übrigen ist jede Gefahr der Bildung von Querfalten während der Herstellung der Dentalkappe überwunden, so daß insoweit auch die Qualität einer unter Verwendung der erfindungsgemäßen Dentalkappe hergestllten Verbundkrone

verbessert ist. Durch entsprechende Gestaltung der Ausschnitte im Folienstück läßt sich im übrigen im Mantelbereich der fertigen Dentalkappe eine praktisch absolute Gleichmäßigkeit der Wandstärke erreichen.

Nachfolgend wird die erfindungsmäße Dentalkappe unter Bezugnahme auf die Zeichnung weiter ins Einzelne gehend beschrieben; in den Zeichnungen zeigt:

Fig. 1 eine Draufsicht auf ein kreisförmiges Folienstück zur Herstellung der erfindungsgemäßen Dentalkappe,

Fig. 2 eine perspektivische Ansicht einer erfindungsgemäßen Dentalkappe in halbfertigem Zustand,

Fig. 3 eine perspektivische Ansicht einer erfindungsgemäßen Dentalkappe mit vier Lappen im Zustand vor dem Aufformen auf ein Zahnstumpfmodell,

Fig. 4 eine perspektivische Ansicht einer erfindungsgemäßen Dentalkappe mit vier Lappen in einem anderen Zustand vor dem Aufformen auf ein Zahnstumpfmodell und

Fig. 5 einen Längsschnitt durch einen sogenannten Swager mit eingesetztem Zahnstumpfmodell und auf diesem aufgesetzter und an das Zahnstumpfmodell angeformter Dentalkappe, das Ganze in sehr schematischer Darstellung.

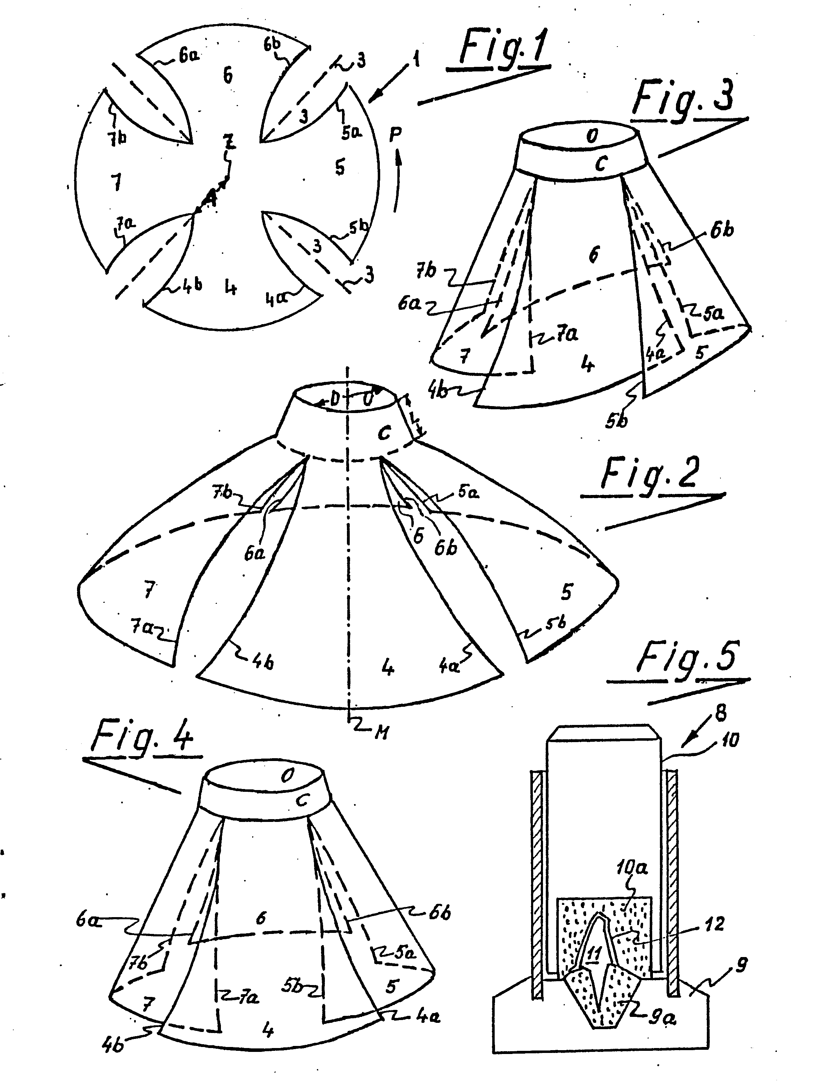

Fig. 1 zeigt in Draufsicht das Ausgang der Herstellung der erfindungsgemäßen Dentalkappe bildende kreisförmige Folienstück 1. Bei dem dargestellten Folienstück 1 sind anstelle von strichliert angedeuteten Einschnitten 2 Ausschnitte 3 vorgesehen. Mittels dieser Ausschnitte 3 ist der äußere Bereich des Folienstücks 1 in Lappen 4, 5, 6 und 7 unterteilt. Die Ausschnitte 3 reichen bis zu einem Abstand A vom Zentrum Z des Folienstücks 1, der dem halben Durchmesser D und der Länge L, beide aus Fig. 2 zu ersehen, entspricht. Der Durchmesser D entspricht dabei dem größtmöglichen Durchmesser eines Zahnstumpfmodells, für das die Dentalkappe verwendbar ist, während die Länge L einem im wesentlichen zylindrischen oder zylindrisch-kegelförmig gestalteten obersten Außenbereichs des Zahnstumpfmodells entspricht.

Die beispielsweise in Richtung des Pfeils P vorderen Radialkanten der Lappen 4 bis 7 sind mit 4a bis 7a bezeichnet, während die jeweils hinteren Radialkanten mit 4b bis 7b bezeichnet sind.

Fig. 2 zeigt das Folienstück der Fig. 1 in perspektivischer Darstellung, nachdem die Lappen 4 bis 7 entlang der die inneren Enden der Ausschnitte 3 berührenden Kreislinie in Richtung auf die durch das Zentrum Z des Folienstücks 1 geführte Drehachse M umgebogen sind. Dieses Umbiegen der Lappen 4 bis 7 kann gleichzeitig mit einem Tiefziehen des in Fig. 2 mit C bezeichneten im wesentlichen zylindrischen oder zylindrisch-kegelförmigen Bereich ausgeführt werden, der entlang der durch den Durchmesser D bestimmten Kreislinie von der Oberseite O der Dentalkappe abgesetzt ist.

Fig. 3 zeigt die Dentalkappe der Fig. 2 ebenfalls in perspektivischer Ansicht, jedoch nach noch weiterem Umbiegen der Lappen 4 bis 7 in Richtung auf die Drehachse M des Fo lienstücks. Und zwar sind dabei jeweils die vorderen Radialkanten 4a bis 7a der Lappen 4 bis 7 stärker in Richtung auf die Drehachse M des Folienstücks umgebogen als die hinteren Radialkanten 4b bis 7b, so daß die erstgenannten Radialkanten innenseitig der Kappe und die letztgenannten Radialkanten außenseitig der Kappe liegen. Der freie Öffnungsbereichs der aus Fig. 3 ersichtlichen Dentalkappe kann durch auf die Lappen 4 bis 7 radial einwärts gerichtete Einwirkung mehr oder weniger weit gestaltet werden. Eine solche Einwirkung wird im übrigen bei dem Aufsetzen der Dentalkappe auf ein Zahnstumpfmodell realisiert, um dabei unter Vergrößerung der gegenseitigen Überlappung der Lappen 4 bis 7 letztere an der Außenfläche des Zahnstumpfmodells unmittelbar zur Anlage zu bringen.

Fig. 4 zeigt wiederum in perspektivischer Darstellung die Dentalkappe der Fig. 2 ebenfalls wie in Fig. 3 dargestellt unter weitergehender Umbiegung der Lappen 4 bis 7 in Richtung auf die Drehachse M des Folienstücks. Jedoch sind in diesem Fall zuerst die Lappen 5 und 7 in Richtung auf die Drehachse M umgebogen und erst anschließend die Lappen 4 und 6, so daß letztere mit ihren vorderen Radialkanten 4a, 6a und ihren hinteren Radialkanten 4b, 6b außenseitig der Dentalkappe liegen, während die vorderen und hinteren Radialkanten 5a, 5b, 7a, 7b der Lappen 5 und 7 innenseitig der Dentalkappe liegen. Auch bei dieser Art der Umbiegung der Lappen 4 bis 7 besteht selbstverständlich die Möglichkeit der weiteren Verengung der freien Öffnung der Dentalkappe durch entsprechende radiale Einwirkung auf die Lappen 4 bis 7.

Bei den dargestellten Ausführungsformen handelt es sich zwar um Dentalkappen mit 4 Lappen, jedoch ist diese Anzahl von Lappen nicht erfindungswesentlich. Es können stattdessen auch Dentalkappen mit nur zwei Lappen oder drei Lap pen oder auch mehr als vier Lappen vorgesehen werden. Die Anzahl der Lappen hängt im wesentlichen davon ab, wie groß ein Zahnstumpfmodell im Umfang ist bei gleichzeitiger Berücksichtigung der Oberseitenfläche des Zahnstumpfmodells. Diese Umstände sind auch dafür maßgeblich, ob im Einzelfall zwischen einander benachbarten Lappen Ausschnitte in dem Folienstück vorgesehen sein sollten oder lediglich Einschnitte. Zugleich sind die Zahnstumpfverhältnisse aber auch für die mehr oder weniger breite Gestaltung der Ausschnitte sowie für die eventuelle Schräglage der Einschnitte (im Gegensatz zu einer ausschließlich radialen Erstreckung der Einschnitte) maßgeblich.

Fig. 5 zeigt schließlich im Längsschnitt einen sogenannten Swager 8 mit Amboß 9 und Stempel 10, wobei im Amboß 9 und im Stempel 10 jeweils ein hochfestes, elastisches Kissen 9a, 10a, vorgesehen ist. Im Kissen 9a ist ein Zahnstumpfmodell 11 eingesetzt, auf dem eine erfindungsgemäße Dentalkappe 12 aufsitzt. Diese Dentalkappe 12 ist dadurch entstanden, daß eine Dentalkappe beispielsweise im Zustand der Fig. 3 bzw. 4 zunächst auf die Oberseite des Zahnstumpfmodells 11 aufgesetzt worden ist, wonach der Stempel 10 des Swagers 8 in Richtung auf den Amboß 9 geführt worden ist, und zwar im Wege eines kurzen aber äußerst kräftigen Impulsschlages. Während dieses Schlages ist die halbfertige Dentalkappe der Fig. 3 bzw. 4 zur absolut dichten Anlage an dem Zahnstumpfmodell 11 gebracht worden, so daß ihre innere Hohlform exakt dem Zahnstumpfmodell 11 und damit den gegebenen Strukturen des zugehörigen Patienten entspricht. Die im Swager 8 abschließend endgültig verformte Dentalkappe 12 muß anschließend lediglich in der üblichen Weise, beispielsweise nach Aufstäuben von Goldpulver, kurz in eine Flamme eingebracht werden, so daß das Goldpulver aufschmilzt und die einander überlappenden Lappen unlösbar miteinander verbindet. Damit ist dann die endgültig den Träger für eine Verblendung einer Verbundkrone bildende Dentalkappe erreicht, die eine erstaunlich hohe Formstabilität aufweist, deren Wandstärke absolut gleichmäßig und jederzeit reproduzierbar ist und die im übrigen insbesondere in Hinblick auf die Arbeitskosten aber auch in Hinblick auf die Materialkosten äußerst preiswert ist und insbesondere preiswerter als jede in Gießtechnik hergestellte Dentalkappe.

Als Verblendungsmaterialien kommen selbstversatändlich neben Porzellan die üblicherweise in der Dentaltechnik verwendeten Kunststoffe in Betracht.

Die gegenseitige Fixierung der Lappen 4 bis 7 in ihren Überlappungsbereichen kann statt im Wege der Goldverschmelzung auch im Wege des Kaltverschweißens erfolgen, das im übrigen gelegentlich sogar gleichzeitig mit dem Umbiegen der Lappen in Richtung auf die Drehachse des ursprünglich kreisförmigen Folienstücks ausgeführt werden kann.

## Ansprüche

1. Dentalkappe zur Verwendung als Träger für die Verblendung einer Verbundkrone, welche Kappe aus einer Edelmetall-Folie, insbesondere einer Edelmetall-Verbundfolie, in im wesentlichen zylindrischer oder zylindrisch-kegelstumpfförmiger Gestalt besteht, die ausgehend von einem kreisförmigen Folienstück durch Umbiegen des äußeren Bereichs desselben in Richtung auf die Drehachse des kreisförmigen Folienstücks unter Ausbildung von gegenseitigen Überlappungen gebildet ist, wobei die Überlappungsbereiche miteinander unlösbar zu verbinden sind, dadurch gekennzeichnet, daß der äußere Bereich des kreisförmigen Folienstücks (1) in mindestens zwei etwa flügelförmige Lappen (4 bis 7) unterteilt ist, wobei einander benachbarte Lappen (4,5; 5,6; 6,7; 7,4) in einem solchen Abstand (A) vom Zentrum (Z) des kreisförmigen Folienstücks (1) miteinander in Verbindung stehen, der mindestens dem halben Durchmesser (D) der Kappenoberseite (O) entspricht.

2. Dentalkappe nach Anspruch 1, dadurch gekennzeichnet, daß der äußere Bereich des kreisförmigen Folienstücks (1) in vier etwa flügelförmige Lappen (4, 5, 6, 7) unterteilt ist

3. Dentalkappe nach Anspruch 1 oder 2, dadurch gekennzeichnet, daß einander benachbarte Lappen (4,5; 5,6; 6,7; 7,4) in einem solchen Abstand (A) vom Zentrum (Z) des kreisförmigen Folienstücks miteinander in Verbindung stehen, der dem halben Durchmesser (D) der Kappenoberseite (O) und der Länge (L) eines durch Kaltziehen gebildeten, von Haus aus geschlossenen, im wesentlichen zylindrisch oder leicht konisch gestalteten Bereichs (C) der Kappe entspricht.

4. Dentalkappe nach mindestens einem der vorhergehenden Ansprüche, dadurch gekennzeichnet, daß zwischen einander benachbarten Lappen (4, 5, 6, 7) Ausschnitte (3) in dem kreisförmigen Folienstück (1) ausgebildet sind.

5. Dentalkappe nach mindestens einem der vorhergehenden Ansprüche, dadurch gekennzeichnet, daß alle Lappen (4, 5, 6, 7) zur Bildung der im wesentlichen zylindrischen oder zylindrisch-kegelförmigen Gestalt der Kappe so in Richtung auf die Drehachse (M) des kreisförmigen Folienstücks (1) umgebogen sind, daß ihre in jeweils gleicher Umlaufrichtung (P) gesehen vorderen Radialkanten (4a, 5a, 6a, 7a) an der Außenseite der Kappe angeordnet sind, während ihre jeweils hinteren Radialkanten (4b, 5b, 6b, 7b) an der Innenseite der Kappe angeordnet sind bzw. umgekehrt.

6. Dentalkappe nach mindestens einem der Ansprüche 1 bis 4, dadurch gekennzeichnet, daß bei einer Kappe mit einer geraden Anzahl von Lappen (4, 5, 6, 7) beide Radialkanten (5a, 5b; 7a, 7b) jedes zweiten Lappens (5, 7) an der Außenseite der Kappe angeordnet sind, während die beiden Radialkanten (4a, 4b; 6a, 6b) aller übrigen Lappen (4, 6) an der Innenseite der Kappe angeordnet sind.

7. Dentalkappe nach mindestens einem der vorhergehenden Ansprüche, dadurch gekennzeichnet, daß die Lappen (4, 5, 6, 7) in ihren gegenseitigen Überlappungsbereichen durch Kaltverschweißen unlösbar miteinander fixiert sind.

Fig.1

Fig.3

Fig.2

Fig.4

Fig.5

Europäisches
Patentamt

# EUROPÄISCHER RECHERCHENBERICHT

Nummer der Anmeldung

EP 88 10 3750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | DE-A-3 611 277 (KÖRBER)<br>* ganzes Dokument *<br>--- | 1,2,4,5 | A 61 C 5/10 |
| A | EP-A-0 202 431 (H. TRUETSCH)<br>* Seite 1, Zeile 38 - Seite 2, Zeile 34; Figuren 1-3 *<br>--- | 1 | |
| D,A | EP-A-0 104 320 (SHOHER et al.)<br>* Seite 6, Zeile 6 - Seite 8, Zeile 13; Figuren 1-5 *<br>----- | 1 | |
| | | | RECHERCHIERTE SACHGEBIETE (Int. Cl.4)<br><br>A 61 C 5/00 |

Der vorliegende Recherchenbericht wurde für alle Patentansprüche erstellt

| Recherchenort | Abschlußdatum der Recherche | Prüfer |
|---|---|---|
| BERLIN | 13-06-1988 | SIMON J J P |